# EUROPEAN PATENT APPLICATION

(11) **EP 3 686 351 A1**
(43) Date of publication of application: **29.07.2020**
(21) Application number: 19305082.0
(22) Date of filing: 23.01.2019
(51) Int. Cl.: E02F 3/32, E02F 9/08, B60K 15/03

(54) **FLUID COOLING DEVICE AND CONSTRUCTION MACHINE**

(71) Applicant: Yanmar Co., Ltd., Osaka-shi, Osaka 530-8311 (JP)
(72) Inventor: COLIBERT, Quentin, 52100 Saint-Dizier (FR); WARNIER, Clément, 52100 Saint-Dizier (FR); GAUCHER, Emile, 52100 Saint-Dizier (FR)
(74) Representative: Poindron, Cyrille

(57) **Abstract**

[OBJECT] To provide a fluid cooling device and a construction machine that offer a good efficiency of assembling and that allow an efficient layout of pipings for taking contents of a tank out of the tank.

[SOLUTION] A fluid cooling device includes: a blower unit 51 configured to generate an airflow by rotating a fan 51a; an oil cooler 52 that is disposed so as to face the blower unit 51; and a fan shroud 53 that is disposed between the blower unit 51 and the oil cooler 52. The fan shroud 53 includes: a baffle part 531 for guiding the airflow; a protruding part 532 molded integrally with the baffle part 531, the protruding part 532 protruding from a lower portion of the baffle part 531 to support a lower portion of the oil cooler 52; and an operating oil tank 533 molded integrally with the baffle part 531, and the operating oil tank 533 being disposed on a first side of the baffle part 531 and being in communication with the oil cooler 52. The operating oil tank 533 includes: a tank main body 533a; a constricted portion 533b provided below the tank main body 533a; and an extending portion 533c extending from the constricted portion 533b to a location below the protruding part 532.

## Description

### Technical Field

The present invention relates to a fluid cooling device and a construction machine.

### Background Art

Patent Literature 1 (PTL 1) listed below discloses a technique related to a hydraulic shovel having an oil cooler attached to a shroud with a bracket interposed therebetween, the technique attaching a relay pipe to the bracket, the relay pipe allowing operating oil to return to an operating oil tank through the oil cooler.

Patent Literature 2 (PTL 2) listed below discloses a technique in which a part of a storage tank made of a plastic material constitutes a fan shroud.

### Citation List

### Patent Literature

Patent Literature 1: Japanese Patent Application Laid-Open No. 2007-217919
Patent Literature 2: PCT International Publication No. WO2004/113698

### Summary of Invention

### Technical Problem

PTL 1 can increase the efficiency of assembling by unitizing the oil cooler and hydraulic pipings (relay pipe) with interposition of the bracket, but cannot provide a sufficient efficiency of assembling in terms of the operating oil tank because the operating oil tank is disposed separately. In addition, in a case of a small-sized construction machine, an engine room is narrow, and full utilization of its interior space cannot be achieved, disadvantageously.

Applying the technique of PTL 2 to an operating oil tank of a construction machine causes a problem that the capacity of the operating oil tank is not sufficient and a problem that an efficient layout of pipings for connecting the operating oil tank to a hydraulic pump that sucks operating oil from the operating oil tank is difficult.

In view of the problems described above, the present invention aims to provide a fluid cooling device and a construction machine that offer a good efficiency of assembling and that allow an efficient layout of pipings for taking contents of a tank out of the tank.

### Solution to Problem

A fluid cooling device according to the present invention includes:
a blower unit configured to generate an airflow by rotating a fan;
a heat exchanger that is disposed so as to face the blower unit; and
a fan shroud that is disposed between the blower unit and the heat exchanger,
the fan shroud including a baffle part, a protruding part that is molded integrally with the baffle part, and a tank that is molded integrally with the baffle part, the baffle part being configured to guide the airflow, the protruding part protruding from a lower portion of the baffle part to support a lower portion of the heat exchanger, the tank being disposed on a first side of the baffle part and being in communication with the heat exchanger,
the tank including a tank main body, a constricted portion, and an extending portion, the constricted portion being provided below the tank main body, the extending portion extending from the constricted portion to a location below the protruding part.

In the present invention, the fan shroud is molded integrally with the protruding part for supporting the heat exchanger and with the tank that is in communication with the heat exchanger, which can provide a good efficiency of assembling. In addition, the tank has the constricted portion in its lower portion. This allows an efficient layout by holding peripheral pipings on the constricted portion, without the need to separately provide a bracket or the like, for example. Moreover, the extending portion of the tank is disposed below the protruding part that supports the lower portion of the heat exchanger. This allows an efficient layout of pipings for taking contents of the tank out of the tank.

### Brief Description of Drawings

[FIG. 1] A side view of a construction machine according to an embodiment.

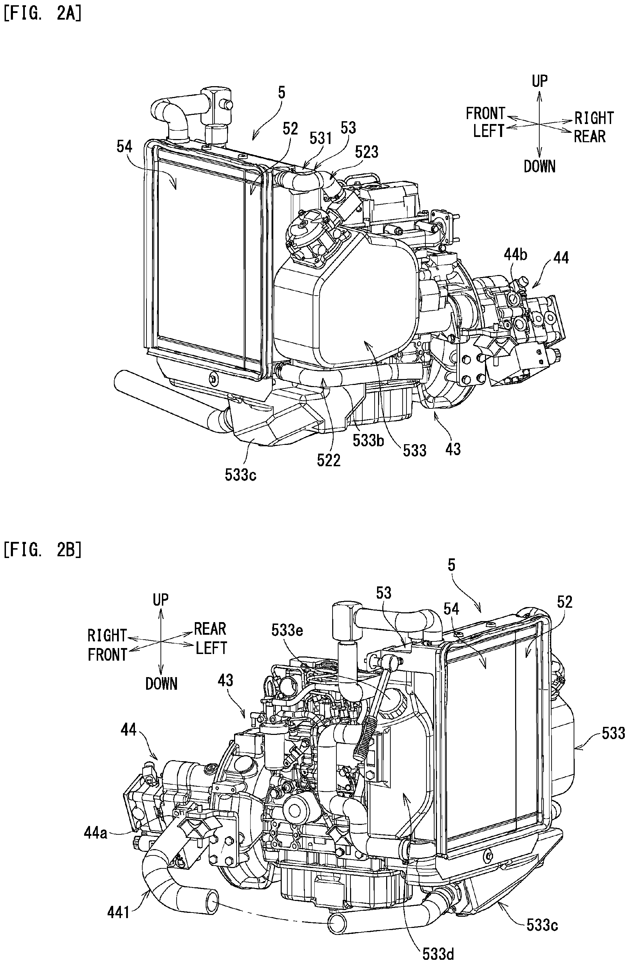

[FIG. 2A] A perspective view of an engine and a fluid cooling device as viewed from rear left.
[FIG. 2B] A perspective view of the engine and the fluid cooling device as viewed from front left.
[FIG. 3] An exploded perspective view of the fluid cooling device.

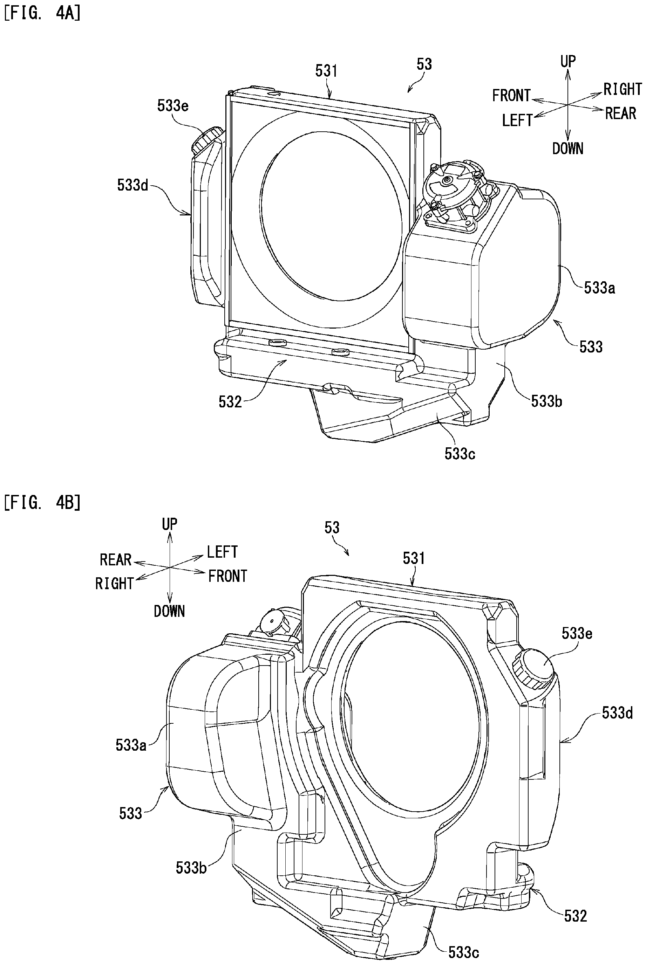

[FIG. 4A] A perspective view of a fan shroud as viewed from rear left.
[FIG. 4B] A perspective view of the fan shroud as viewed from front right.

### Description of Embodiments

With reference to the drawings, an embodiment of the present invention will be described below.

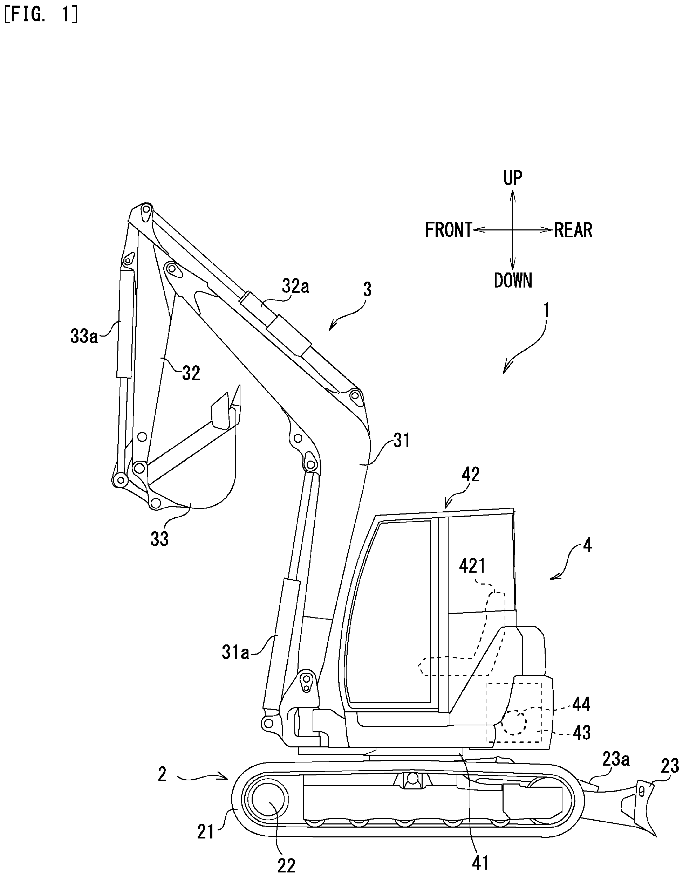

First, referring to FIG. 1, a schematic structure of a hydraulic shovel 1 which is one example of a construction machine will be described. The hydraulic shovel 1 includes a lower traveling body 2, work equipment 3, and an upper revolving body 4.

The lower traveling body 2 includes a pair of left and right crawlers 21, 21 and a pair of left and right running motors 22, 22. The left and right running motors 22, 22 drive the left and right crawlers 21, 21, respectively, to allow the hydraulic shovel 1 to move forward or backward. The lower traveling body 2 is also provided with a blade 23 and a blade cylinder 23a which is a hydraulic cylinder for turning the blade 23 in an up-down direction.

The work equipment 3 includes a boom 31, an arm 32, and a bucket 33 which are independently driven so that an excavation work can be performed on, e.g., earth and sand. Each of the boom 31, the arm 32, and the bucket 33 corresponds to a work unit, and the hydraulic shovel 1 includes a plurality of work units.

The boom 31 has its proximal end portion supported by a front portion of the upper revolving body 4, and is turned by a boom cylinder 31a which is capable of expansion and contraction. The arm 32 has its proximal end portion supported by a distal end portion of the boom 31, and is turned by an arm cylinder 32a which is capable of expansion and contraction. The bucket 33 has its proximal end portion supported by a distal end portion of the arm 32, and is turned by a bucket cylinder 33a which is capable of expansion and contraction. The boom cylinder 31a, the arm cylinder 32a, and the bucket cylinder 33a are each made up of hydraulic cylinders.

The upper revolving body 4 is attached to an upper portion of the lower traveling body 2 via a revolving bearing 41 such that the upper revolving body 4 is capable of revolving. In the upper revolving body 4, a control section 42, an engine 43, a revolving motor (not shown), and the like are disposed. A driving force of the revolving motor which is a hydraulic motor causes the upper revolving body 4 to revolve via the revolving bearing 41. In the upper revolving body 4, moreover, a hydraulic pump 44 which is driven by the engine 43 is disposed. The hydraulic pump 44 supplies operating oil to respective hydraulic actuators (such as the blade cylinder 23a, the boom cylinder 31a, the arm cylinder 32a, the bucket cylinder 33a, the revolving motor, and the like).

In the control section 42, a control seat 421 is disposed. To the left and right of the control seat 421, a pair of work manipulation levers (not shown) are disposed. In front of the control seat 421, a pair of travel levers (not shown) are disposed. While sitting on the control seat 421, an operator can control the hydraulic actuators by manipulating the work manipulation levers, the travel levers, and the like, to thereby perform traveling, revolving, works, and the like.

The engine 43 and a fluid cooling device 5 will now be described. The engine 43 is disposed in an engine room which is provided in a rear portion of the upper revolving body 4. The engine 43 of this embodiment is a so-called transverse engine whose crankshaft has its axis disposed in a left-right direction of the upper revolving body 4.

The fluid cooling device 5 is attached to the engine 43. The fluid cooling device 5 includes: a blower unit 51 configured to generate an airflow by rotating a fan 51a; an oil cooler 52 (one example of a heat exchanger) that is disposed so as to face the blower unit 51; and a fan shroud 53 that is disposed between the blower unit 51 and the oil cooler 52.

The fan 51a is connected to a first end side of the crankshaft of the engine 43. Rotation of the crankshaft causes the fan 51a to rotate, thereby generating an airflow toward the engine 43. As a result, air (outside air) existing outside the engine room is taken into the engine room, to generate cool air flowing toward the engine 43.

The oil cooler 52 is disposed to the left of the fan shroud 53. The oil cooler 52 has a rectangular parallelepiped shape that is elongated in the up-down direction. The oil cooler 52 allows oil flowing therethrough to be cooled by heat exchange between the oil and air flowing outside. The oil cooler 52 has a lower portion to which a supply hose 522 (corresponding to a first piping) for supplying operating oil is connected, and an upper portion to which a discharge hose 523 for discharging operating oil is connected.

In this embodiment, a radiator 54 is disposed to the left of the fan shroud 53, and the radiator 54 is adjacent to the oil cooler 52. The radiator 54 has a rectangular parallelepiped shape whose length in the up-down direction is equal to that of the oil cooler 52. The radiator 54 as well as the oil cooler 52 covers an entire surface of the fan shroud 53. The radiator 54 allows water flowing therethrough to be cooled by heat exchange between the water and air flowing outside. The radiator 54 cools cooling water of the engine 43.

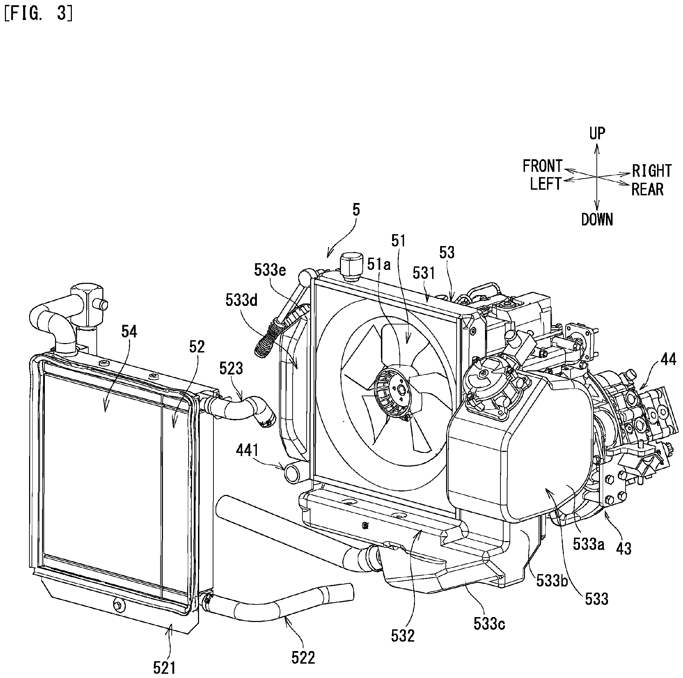

The fan shroud 53 is a member for efficiently exposing the oil cooler 52 and the radiator 54 to the cool air generated by the fan 51a. The fan shroud 53 includes: a baffle part 531 for guiding an airflow; a protruding part 532 that protrudes from a lower portion of the baffle part 531; and an operating oil tank 533 that is disposed on a first side (in FIG. 3, on the rear side) of the baffle part 531. The baffle part 531, the protruding part 532, and the operating oil tank 533 are integrally molded. For example, the fan shroud 53 is formed by injection molding. The baffle part 531, the protruding part 532, and the operating oil tank 533 are hollow, and their interior spaces are in communication with each other.

The baffle part 531 is a box-shaped member having a size almost equal to those of the oil cooler 52 and the radiator 54. A surface of the baffle part 531 on the side where the oil cooler 52 and the radiator 54 are disposed is entirely opened, and a surface of the baffle part 531 on the side where the fan 51a is disposed has an insertion hole whose diameter is slightly larger than the diameter of the fan 51a.

The protruding part 532 protrudes from the lower portion of the baffle part 531, and has a width almost equal to that of the baffle part 531. The protruding part 532 supports lower portions of the oil cooler 52 and the radiator 54 from below. The protruding part 532 has a protruding length that is almost equal to the total thickness of the oil cooler 52 and the radiator 54. The oil cooler 52 and the radiator 54 are fixed to the baffle part 531 and to the protruding part 532 by a quadrangular frame 521.

The operating oil tank 533 is in communication with the oil cooler 52 through the discharge hose 523. Operating oil in the operating oil tank 533 is supplied to the respective hydraulic actuators by the hydraulic pump 44, and operating oil returning from the respective hydraulic actuators is returned to the operating oil tank 533 via the oil cooler 52.

The operating oil tank 533 includes: a tank main body 533a; a constricted portion 533b that is provided below the tank main body 533a; and an extending portion 533c that extends from the constricted portion 533b to a location below the protruding part 532.

The tank main body 533a has a box-like shape capable of storing operating oil therein. The length of the tank main body 533a in the left-right direction is larger than that of the baffle part 531. In a plan view, therefore, a left side surface of the tank main body 533a is more leftward than a left side surface of the baffle part 531, and a right side surface of the tank main body 533a is more rightward than a right side surface of the baffle part 531.

In a plan view, the cross-sectional area of the constricted portion 533b is smaller than the cross-sectional area of the tank main body 533a. In a plan view, a rear surface and left and right side surfaces of the constricted portion 533b are located more inward than a rear surface and the left and right side surfaces of the tank main body 533a. The constricted portion 533b has an interior space that is in communication with the interior spaces of the tank main body 533a and the protruding part 532.

The extending portion 533c extends frontward from the lower portion of the constricted portion 533b, up to a middle portion of the protruding part 532 in a front-rear direction. The extending portion 533c has a substantially triangular shape in a side view. The front end of the extending portion 533c is in communication with a suction port 44a of the hydraulic pump 44 which will be described later. The extending portion 533c has an interior space that is in communication with the interior spaces of the constricted portion 533b and the protruding part 532.

On a second side (in FIG. 3, on the front side) of the baffle part 531, a fluid supply portion 533d is disposed. The fluid supply portion 533d is molded integrally with the baffle part 531. In a plan view, a right-side end surface of the fluid supply portion 533d is flush with the right side surface of the baffle part 531, and a left-side end surface of the fluid supply portion 533d is more leftward than the left side surface of the baffle part 531.

The fluid supply portion 533d has an interior space that is in communication with the interior space of the baffle part 531. The fluid supply portion 533d has, in its upper portion, an oil filler port 533e. Operating oil fed from the oil filler port 533e is supplied to the operating oil tank 533 via the baffle part 531. Unification of the fluid supply portion 533d and the baffle part 531 can offer a good efficiency of assembling and can allow effective use of a space in the engine room.

The hydraulic pump 44 is connected to a second end side of the crankshaft of the engine 43, the second end side being opposite to the side where the fan 51a is disposed. The hydraulic pump 44 sucks operating oil through the suction port 44a, and ejects operating oil through an ejection port 44b.

A suction hose 441 (corresponding to a second piping) is connected to the suction port 44a of the hydraulic pump 44. The suction hose 441 extends at the front side of the engine 43 toward the left, and is connected to the front end of the extending portion 533c. Since the suction hose 441 extends from the extending portion 533c which is located below the operating oil tank 533 to the suction port 44a of the hydraulic pump 44 through a region below the oil cooler 52 and the radiator 54, the space in the engine room can be effectively used.

Operating oil ejected from the ejection port 44b of the hydraulic pump 44 is sent to a control valve (not shown), and then is supplied from the control valve to the respective hydraulic actuators. Operating oil returning from the respective hydraulic actuators is supplied from the control valve to the oil cooler 52 through the supply hose 522, and then is returned from the oil cooler 52 to the operating oil tank 533 through the discharge hose 523.

The supply hose 522 is disposed along the constricted portion 533b of the operating oil tank 533. More specifically, the supply hose 522 coming from the right side of the operating oil tank 533 extends through the rear side and the left lateral side of the constricted portion 533b, and is connected to the rear end of the oil cooler 52. In a plan view, portions of the supply hose 522 located on the rear side and on the left lateral side of the constricted portion 533b overlap the tank main body 533a. The extending portion 533c has a projecting portion that is provided below the portion of the supply hose 522 located on the left lateral side of the constricted portion 533b. Arranging the supply hose 522 of the constricted portion 533b along the constricted portion 533b allows effective use of the space in the engine room.

### [Other Embodiments]

(1) In the embodiment described above, the oil cooler 52 and the radiator 54 are arranged such that they cooperate with each other to cover the fan shroud 53. Alternatively, the fan shroud 53 may be covered with only one of the oil cooler 52 and the radiator 54. In such a configuration, the oil cooler 52 and the radiator 54 may be sized almost equally, and the oil cooler 52 and the radiator 54 may be arranged in a stacking manner.
(2) In the embodiment described above, the engine 43 is a transverse engine whose crankshaft has its axis disposed in the left-right direction of the upper revolving body 4. Alternatively, the engine 43 may be a vertical engine. In a case where the engine 43 is a transverse engine, the engine 43 may be arranged with the blower unit 51 located to the right of the engine 43 and the hydraulic pump 44 located to the left of the engine 43.

An embodiment of the present invention has been described with reference to the drawings. It however should be considered that specific configurations of the present invention are not limited to this embodiment. The scope of the present invention is indicated not only by the description of the above embodiment but also by the scope of the claims, and includes all variations and modifications that have been made within a meaning and a scope equivalent to those of the scope of the claims.

### Reference Signs List

- 1: hydraulic shovel
- 2: lower traveling body
- 3: work equipment
- 4: upper revolving body
- 5: fluid cooling device
- 43: engine
- 44: hydraulic pump
- 44a: suction port
- 51: blower unit
- 51a: fan
- 52: oil cooler
- 53: fan shroud
- 531: baffle part
- 532: protruding part
- 533: operating oil tank
- 533b: constricted portion
- 533c: extending portion
- 533d: fluid supply portion

## Claims

1. A fluid cooling device comprising:
a blower unit configured to generate an airflow by rotating a fan;
a heat exchanger that is disposed so as to face the blower unit; and
a fan shroud that is disposed between the blower unit and the heat exchanger,
the fan shroud including a baffle part, a protruding part that is molded integrally with the baffle part, and a tank that is molded integrally with the baffle part, the baffle part being configured to guide the airflow, the protruding part protruding from a lower portion of the baffle part to support a lower portion of the heat exchanger, the tank being disposed on a first side of the baffle part and being in communication with the heat exchanger,
the tank including a tank main body, a constricted portion, and an extending portion, the constricted portion being provided below the tank main body, the extending portion extending from the constricted portion to a location below the protruding part.

2. The fluid cooling device according to claim 1, wherein
the fan shroud includes a fluid supply portion that is molded integrally with the baffle part, the fluid supply portion being disposed on a second side of the baffle part and being in communication with the tank.

3. A construction machine equipped with the fluid cooling device according to claim 1 or 2, the construction machine comprising:
an engine that is connected to the blower unit, and that is configured to rotate the fan;
a hydraulic pump that is connected to the engine, on a side opposite to a side where the blower unit is disposed;
a first piping that guides an operating oil fed under pressure from the hydraulic pump to the heat exchanger; and
a second piping that is connected to a suction port of the hydraulic pump,
the first piping being disposed along the constricted portion, the second piping being connected to the extending portion.
